# EUROPÄISCHE PATENTSCHRIFT

(11) **EP 2 350 639 B1**
(45) Veröffentlichungstag und Bekanntmachung des Hinweises auf die Patenterteilung: **21.08.2019**
(21) Anmeldenummer: 09749095.7
(22) Anmeldetag: 03.11.2009
(51) Int. Cl.: G01N 29/22, G01N 29/265, G01N 29/28

(54) **FLÄCHENPRÜFKOPF ZUR ULTRASCHALLPRÜFUNG EINES BAUTEILS**
PLANAR PROBE HEAD FOR ULTRASONIC TESTING OF A COMPONENT
PALPEUR PLAN POUR LE CONTRÔLE D'UNE PIÈCE PAR ULTRASONS

(30) Priorität: 03.11.2008 DE 102008037516
(43) Veröffentlichungstag der Anmeldung: 03.08.2011
(73) Patentinhaber: GE Sensing & Inspection Technologies GmbH, 50354 Hürth (DE)
(72) Erfinder: KOCH, Roman, 63825 Blankenbach (DE); DE ODORICO, Walter, 65779 Kelkheim (DE); HAASE, Wolfgang, 63877 Sailauf (DE)
(74) Vertreter: Patentanwälte Bauer Vorberg Kayser
(86) Internationale Anmeldenummer: PCT/EP2009/064564
(87) Internationale Veröffentlichungsnummer: WO 2010/060759

(56) Entgegenhaltungen:
- FR-A1- 2 891 910
- US-A- 4 165 649
- US-A- 5 469 744
- US-A- 5 567 881
- US-A1- 2005 132 809
- US-B1- 7 284 434

## Beschreibung

Die Erfindung bezieht sich auf einen Flächenprüfkopf zur Ankopplung von Ultraschallsignalen an ein zu prüfendes flächiges Bauteil mittels Wasserfreistrahltechnik, umfassend einen Prüfkopf, zumindest eine Vorlaufkammer mit zumindest einem Wassereinlass, sowie einen Grundkörper zur Aufnahme des Prüfkopfs, der zumindest einen Vorlaufkammer sowie einer der zumindest einen Vorlaufkammer nachgeordneten Strömungskammer, welche sich durch eine schlitzförmige Wasserauslassöffnung zu einer Unterseite des Flächenprüfkopfes erstreckt, wobei sich zwischen der Unterseite des Flächenprüfkopfes und einer Oberfläche des zu prüfenden Bauteils eine Wasserströmung bildet, wobei der Prüfkopf außerhalb der zumindest einen Strömungs- und/oder Vorlaufkammer frei zugänglich lösbar angeordnet ist und wobei eine Sende-/Empfangselemente aufweisende Seitenfläche des Prüfkopfes einen Innenwandabschnitt der Strömungskammer bildet. Beschrieben wird im Zusammenhang mit der Erfindung auch eine Vorrichtung zur Ultraschallprüfung eines flächigen Bauteils mittels Wasserfreistrahltechnik, umfassend einen Flächenprüfkopf mit einem Grundkörper zur Aufnahme eines Prüfkopfs, zumindest einer Vorlaufkammer sowie einer Strömungskammer, welche sich durch eine schlitzförmige Wasserauslassöffnung zu einer Unterseite des Flächenprüfkopfs erstreckt, wobei sich zwischen der Unterseite des Flächenprüfkopfs und einer Oberfläche des zu prüfenden Bauteils eine Wasserströmung bildet, wobei der Flächenprüfkopf über eine Haltevorrichtung mit einer Handhabungsmaschine wie Portalroboter verbindbar und mittels dieser entlang des Bauteils in Prüfrichtung verfahrbar ist, wobei der Flächenprüfkopf in der Haltevorrichtung um eine quer zur Prüfrichtung verlaufende Achse schwenkbar ist, sowie ein Verfahren zur Ultraschallprüfung des Bauteils.

Ein Flächenprüfkopf der eingangs genannten Art ist in der WO-A-2008/106535 beschrieben. Der Flächenprüfkopf ist insbesondere zur Prüfung von Kanten einer Struktur ausgebildet und umfasst einen Linear Array Transducer, welcher mit einem Gehäuse verbunden ist und oberhalb einer sich verjüngenden Strömungskammer angeordnet ist. Die sich verjüngende Strömungskammer bildet einen Spalt für ein flüssiges Kopplungsmittel zwischen dem Linear Array Transducer und einer zu prüfenden Struktur, wenn der Linear Array Transducer über einer Kante der Struktur positioniert ist. Eine Unterseite der Strömungskammer liegt unmittelbar auf der Oberfläche der zu prüfenden Struktur auf. Ferner ist der Flächenprüfkopf an einem Halter um seine Längsachse drehbar befestigt.

Aus der EP-A-0 164 168 ist ein modularer Aufbau eines Ultraschallprüfkopfs bekannt, der mittels Wasserfreistrahltechnik an ein zu prüfendes Bauteil ankoppelbar ist.

Bei dieser Ausführungsform verjüngt sich die Strömungskammer in Richtung einer schlitzförmigen Wasserauslassöffnung, so dass eine Unterseite der Strömungskammer eine geringe Fläche aufweist.

Die US-B-4,507,969 bezieht sich auf einen Ultraschallflüssigkeitsstrahlprüfkopf. Auch dieser Prüfkopf umfasst eine Vorlaufkammer mit zumindest einem Wassereinlass, sowie eine der zumindest einen Vorlaufkammer nachgeordneten Strömungskammer, jedoch mit punktförmiger Wasserauslassöffnung. Die Strömungskammer ist außenseitig kegelstumpfförmig ausgebildet, wobei die Unterseite als Kreisfläche ausgebildet ist.

In der US-B-7,234,353 ist eine fluidlose akustische Ankopplung eines Ultraschallsensors zur Prüfung einer internen Struktur eines Bauteils beschrieben. Ein Ultraschallwandler wird dabei mittels einer automatischen Positionierungsvorrichtung wie steuerbarer Handhabungseinrichtung positioniert.

Eine weitere Ultraschall-Prüfkopfanordnung ist beispielsweise in der WO 2006/122798 A1 beschrieben. Diese umfasst Vorlauf- und Filterkammern, welche in eine Strahldüse übergehen, wobei ein Prüfkopf von den Vorlauf- bzw. Filterkammern umschlossen und von Wasser umströmt wird.

Die Anordnung zeichnet sich zwar durch hervorragende Strömungseigenschaften aus, allerdings ist der Austausch des Prüfkopfes aufwendig und mit einer Demontage der Filter- bzw. Vorlaufkammern verbunden.

Für bestimmte Anwendungen, beispielsweise die Ultraschallprüfung von flächigen Bauteilen wie Platten, bei denen die Prüfkopfanordnung auf einer Oberseite des zu prüfenden flächigen Bauteils aufliegt und entlang dieses bewegt wird, ist auch das Gewicht des Prüfkopfes von Bedeutung, so dass der Wunsch nach einer Prüfkopfanordnung mit geringem Gewicht und guter Gleiteigenschaft besteht.

Davon ausgehend liegt der vorliegenden Erfindung die Aufgabe zugrunde, einen Flächenprüfkopf der eingangs genannten Art derart weiterzubilden, dass die Ultraschallprüfung von flächigen Bauteilen vereinfacht wird.

Die Aufgabe wird erfindungsgemäß dadurch gelöst, dass der Flächenprüfkopf mit einer bauteilseitig Unterseite des Flächenprüfkopfes bildenden Gleitplatte verbunden ist, deren flächige Erstreckung entlang des Bauteils größer als flächige Erstreckung des Grundkörpers entlang des Bauteils ist, und dass die Gleitplatte die schlitzförmige Wasserauslassöffnung aufweist.

Gegenüber dem Stand der Technik wird der Vorteil erreicht, dass durch die Gleitplatte mit vergrößerter Unterseite die Auflagefläche des Flächenprüfkopfs auf einer Oberfläche des zu prüfenden Bauteils vergrößert wird, wodurch sich bei Verwendung der Wasserfreistrahltechnik zwischen der Unterseite der Gleitplatte und der Oberfläche des zu prüfenden Bauteils ein Wasserkissen ausbilden kann, auf dem der Flächenprüfkopf aufliegt und somit leicht über das zu prüfende Bauteil verfahrbar ist.

Aufgrund der großen Auflagefläche ist die Verwendung des Flächenprüfkopfs zusammen mit einer Gravitationsausgleichsvorrichtung möglich.

Zur Ultraschallprüfung von flächigen Bauteilen mit produktionsbedingten Durchbrechungen wie Ausschnitten oder Bohrungen überragt die Gleitplatte die Grundfläche des Grundkörpers und ist in ihren Dimensionen größer, als eine Größendimension einer Durchbrechung in Prüfrichtung und/oder quer zur Prüfrichtung des zu prüfenden Bauteils.

Vorzugsweise ist der Grundkörper im Wesentlichen U-förmig ausgebildet, mit einer Grundplatte, von der sich an gegenüberliegenden Enden im Verhältnis zu der Länge zur Grundplatte kurze Seitenwandelemente erstrecken, wobei die Grundplatte entlang ihrer Längsachse eine vorzugsweise schlitzförmige Öffnung zur Aufnahme einer Sende-/Empfangselemente aufweisende Unterseite des Prüfkopfes eingebracht ist, sowie vorzugsweise beidseitig parallel zu der schlitzförmigen Öffnung verlaufende Reihen von Durchbrechungen wie Bohrungen, wobei jeder Reihe von Durchbrechungen eine eigenständige und gegen die Oberseite der Grundplatte abdichtbare Vorkammer zugeordnet ist, wobei sich zwischen den Seitenwandelementen entlang einer Unterseite der Grundplatte jeweils eine Innenkontur der Strömungskammer bildende Zwischenelemente angeordnet sind und dass die Zwischenelemente über die parallel zu der Grundplatte verlaufende und mit dem Grundkörper befestigbare Gleitplatte fixierbar sind.

Durch die entlang der schlitzförmigen Öffnung angeordneten Reihen von Durchbrechungen wird auch bei diesem kompakten Design eine turbulenzfreie Strömung bei kleiner Wasserkammer erreicht.

Ferner zeichnet sich der Aufbau des Flächenprüfkopfs durch einfachen Aufbau der Einzelelemente aus. Dadurch können Änderungen in kurzer Zeit bei geringen Kosten durchgeführt werden. Der modulare Aufbau vereinfacht die Instandhaltung.

In einer bevorzugten Ausführungsform ist der Flächenprüfkopf zwischen den eigenständig ausgebildeten Vorlaufkammern angeordnet.

Die Vorlaufkammern sind quaderförmig gestaltet und bestehen vorzugsweise aus einem Kunststoffmaterial, umfassend eine auf einer Unterseite eingebrachte, einen Kammerraum ausbildende Fräsung sowie zumindest eine in einer Oberseite angebrachte Durchbrechung zur Aufnahme eines Wasseranschlusses. Die Vorlaufkammer ist vorzugsweise über Befestigungselemente wie Schrauben derart auf der Oberseite der Grundplatte verschraubbar, dass die parallel zu der schlitzförmigen Öffnung verlaufenden Bohrungen in den Kammerraum der Vorlaufkammer münden.

Zur Erreichung einer turbulenzfreien Strömung sind die Bohrungen in einem Winkel in die Grundplatte des Grundkörpers eingebracht, der im Wesentlichen einem Neigungswinkel der Strömungskammerkontur im Bereich der Bohrungen entspricht.

Gemäß einer bevorzugten Ausführungsform wird die Kontur der Strömungskammer durch die zwei sich gegenüberliegenden Zwischenelemente gebildet. Durch Austausch der Zwischenelemente ist somit auf einfachem Wege eine Konturänderung der Strömungskammer möglich, wobei Grundkörper sowie Gleitplatte und Vorlaufkammer nicht ausgetauscht werden müssen.

Um einen Staudruck zwischen Gleitplatte und zu prüfendem Bauteil zu vermeiden, ist vorgesehen, dass auf einer dem zu prüfenden Bauteil zugewandten Unterseite der Gleitplatte schlitzförmige Ausfräsungen ausgebildet sind.

Unabhängig davon kann in einer Wasserzuleitung ein Überlaufventil angeordnet sein, so dass überschüssiges Wasser schon vor der Vorlaufkammer abgeführt wird.

Durch die kardanische Aufhängung der Prüfkopfanordnung in der Haltevorrichtung wird der Vorteil erreicht, dass die Prüfkopfanordnung der Kontur des zu prüfenden Bauteils passiv nachfolgen kann. Nach dem Stand der Technik wäre dies nicht machbar, da bekannte Prüfköpfe zu schwer und unflexibel sind.

Die Gleitplatte wiest oberseitig eine Vertiefung auf, in der der Grundkörper mit Drehbolzen aufgenommen ist, so dass die Drehbolzen und somit eine Drehachse nahe der Unterseite der Gleitplatte liegt. Dadurch wird eine Drehung um einen tief liegenden Schwerpunkt erreicht.

Bei einer zugehörigen Vorrichtung zur Ultraschallprüfung von flächigen Bauteilen kann dann vorgesehen sein, dass die Unterseite des Flächenprüfkopfes durch eine die schlitzartige Wasserauslassöffnung aufweisende und eine Grundfläche des Grundkörpers überragende Gleitplatte gebildet ist, und dass der Flächenprüfkopf durch die als Gravitationsausgleichsvorrichtung ausgebildete Haltevorrichtung in Y-Richtung längsbeweglich schwingend und vorzugsweise um eine in Prüfrichtung verlaufende Achse drehbeweglich gelagert ist, wobei der Flächenprüfkopf auf einem zwischen Unterseite der Gleitplatte und Oberfläche sich ausbildenden Wassergleitkissen gleitet.

Durch die vergrößerte Gleitplatte, welche eine Fläche aufweist, die in ihren Dimensionen größer ist, als eine Größendimension einer Durchbrechung in Prüfrichtung des zu prüfenden Bauteils, wird die Erzeugung eines tragfähigen Wasserkissens begünstigt, so dass der Einsatz des Flächenprüfkopfs in Verbindung mit einer Gravitationsausgleichsvorrichtung möglich ist. Dadurch wird der Vorteil gegenüber dem Stand der Technik erreicht, dass großflächige Bauteile mit gegebenenfalls unebenen Oberflächen ohne aufwendigen Programmieraufwand geprüft werden können, da Oberflächenschwankungen durch die Gravitationsausgleichsvorrichtung ausgeglichen werden können.

Bei einer bevorzugten Ausführungsform ist vorgesehen, dass Seitenwände der Prüfkopfanordnungen Ausformungen zur Aufnahme von Drehbolzen aufweisen, welche mit der Haltevorrichtung wie Gravitationsausgleichsvorrichtung verbindbar sind. Dadurch wird eine Drehbewegung der Prüfkopfanordnung um die X-Achsc ermöglicht, während durch die Gravitationsausgleichsvorrichtung eine Längsbewegung in Y-Richtung gewährleistet ist.

Bei einem zugehörigen Verfahren zum Prüfen eines flächigen produktionsbedingt Durchbrechungen aufweisenden Bauteils mittels Ankopplung von Ultraschallsignalen in Wasserstrahltechnik unter Verwendung eines Flächenprüfkopfes, der mit einer Gleitplatte verbunden wird, kann vorgesehen sein, dass dessen flächige Erstreckung derart ausgelegt
wird, dass dessen Breite (B) quer zur Prüfrichtung eine Erstreckung aufweist, die größer als übliche Erstreckung der produktionsbedingten Durchbrechungen ist und/oder in Prüflängsrichtung eine Erstreckung aufweist, die größer als übliche Erstreckung der produktionsbedingten Durchbrechungen ist.

Vorzugsweise ist der Prüfkopf mit der Gleitplatte schwimmend auf dem zu prüfenden Bauteil und Unterseite der Gleitplatte auf vorhandenem Wasserkissen gelagert ist.

Das Verfahren wird bevorzugterweise unter Verwendung eines zuvor beschriebenen Flächenprüfkopfes und/oder einer zuvor beschriebenen Vorrichtung bzw. deren Merkmale durchgeführt.

Es zeigen:
- Fig. 1: eine dreidimensionale Darstellung einer Prüfkopfanordnung,
- Fig. 2: eine Schnittdarstellung gemäß Fig. 1,
- Fig. 3: eine Seitenansicht einer Prüfkopfanordnung,
- Fig. 4: eine Draufsicht einer Prüfkopfanordnung gemäß Fig. 1,
- Fig. 5: eine dreidimensionale Darstellung einer Gravitationsausgleichsvorrichtung,
- Fig. 6: eine perspektivische Darstellung des Flächenprüfkopfes mit Gleitplatte im Bereich einer Durchbrechung des zu prüfenden Bauteils,
- Fig. 7: eine perspektivische Darstellung des Flächenprüfkopfes mit Gleitplatte im Bereich einer Kante des zu prüfenden Bauteils und
- Fig. 8: eine Unteransicht der Gleitplatte.

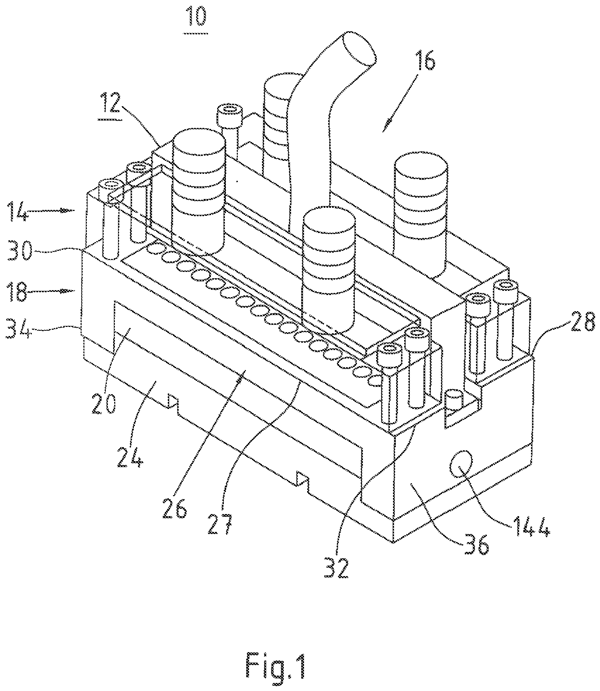

Fig. 1 zeigt eine dreidimensionale Ansicht einer Prüfkopfanordnung 10, die im vorliegenden Fall als Flächenprüfkopf ausgebildet ist. Die Prüfkopfanordnung 10 weist einen modularen Aufbau auf, umfassend einen Prüfkopf 12, zwei Vorlaufkammern 14, 16, einen Grundkörper 18, zwei Strömungskammerelemente 20, 22 sowie eine Gleitplatte 24.

Der Grundkörper 18 ist vorzugsweise aus einem metallischen Material wie Messing ausgebildet. Der Grundkörper 18 weist eine im Wesentlichen reckeckförmige Grundplatte 26 auf, mit Längsrändern 27, 28, die gegenüber Querrändern 30, 32 länger ausgebildet sind. Von den kürzeren Querrändern 30, 32 erstrecken sich Seitenwandelemente 34, 36, die gegenüber einer Längserstreckung der Grundplatte 24 kürzer ausgebildet sind.

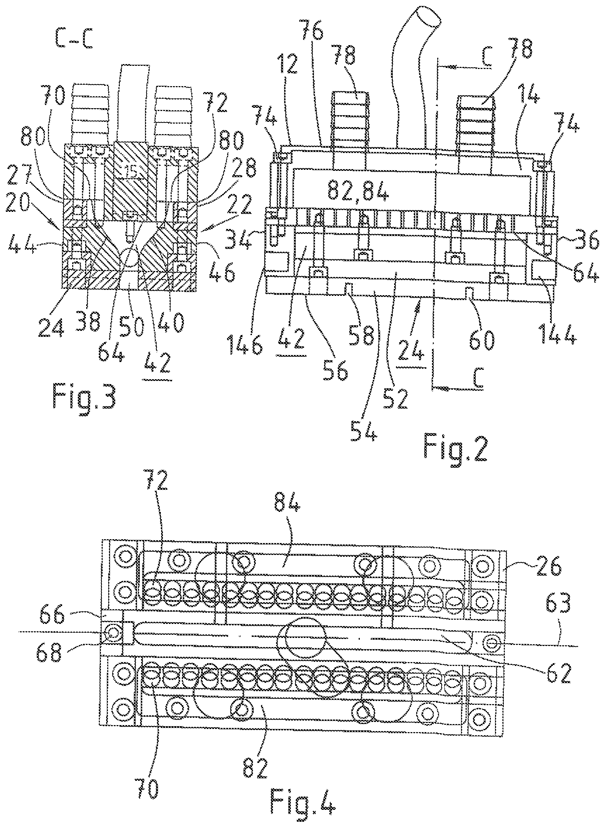

Den Fig. 2 und 3 ist zu entnehmen, dass sich zwischen den Seitenwandelementen 34, 36 die Strömungskammerelemente 20, 22 erstrecken, deren jeweilige Innenflächen 38, 40 gemeinsam eine im Wesentlichen trichterförmige Kontur einer Strömungskammer 42 bilden. Außenseiten 44, 46 der Strömungskammerelemente 20, 22, schließen bündig mit Längsrändern 27, 28 der Grundplatte 26 ab.

Die Strömungskammerelemente 20, 22 werden über die Gleitplatte 24 an dem Grundkörper 18 fixiert. Die Gleitplatte 24 weist eine schlitzförmige Öffnung 50 auf, die den Wasserauslass bildet.

Die Gleitplatte 24 ist als Kunststoffformteil ausgebildet und umfasst einen ersten oberen Abschnitt 52, welcher sich zwischen den Seitenwandelementen 34, 36 erstreckt und an diesen dicht anliegt sowie einen unteren Abschnitt 54, welcher zumindest die Fläche der Grundplatte 26 aufweist.

Zur Vermeidung eines Wasser-Überdrucks zwischen Gleitplatte 24 und dem zu prüfenden Bauteil sind auf einer Unterseite 56 der Gleitplatte 48 Schlitze 58, 60 eingebracht.

Entlang einer Längs-Mittellinie 62 der Grundplatte 26 ist eine schlitzförmige Öffnung 62 eingebracht, über der ebenfalls in Längsrichtung ausgerichtet, der Prüfkopf 12 angeordnet ist, wie in Fig. 4 dargestellt. Insoweit bildet eine Unterseite 64 des Prüfkopfes 12 einen Abschnitt einer Wandung der Strömungskammer 42. Der Prüfkopf 12 ist in einer entlang der schlitzförmigen Öffnung 62 verlaufenden Nut 66 angeordnet und über Befestigungselemente wie Schrauben 68 mit dem Grundkörper 18 verschraubt. Parallel zu der schlitzförmigen Öffnung 62 verlaufen zu beiden Seiten in einer Reihe angeordnete Durchbrechungen 70, 72, wie Bohrungen die sich in die Strömungskammer 42 erstrecken. Über den Durchbrechungen 70, 72 ist jeweils eine der Vorlaufkammern 14, 16 angeordnet, welche sich parallel zu dem Prüfkopf 12 erstrecken und über Befestigungselemente 74 wie Schrauben mit der Grundplatte 26 verbunden sind.

Die Vorlaufkammern 14, 16 sind ebenfalls aus Kunststoffformteilen ausgebildet, und weisen auf ihrer Oberseite 76 Anschlüsse 78 auf, an die Wasserzuläufe anschließbar sind. In einer Unterseite 80 der Vorlaufkammerelemente 14, 16 ist eine Ausfräsung eingebracht, welche einen Kammerraum 82, 84 bildet. Die Durchbrechungen 70, 72 münden in jeweils einen der Kammerräume 82, 84.

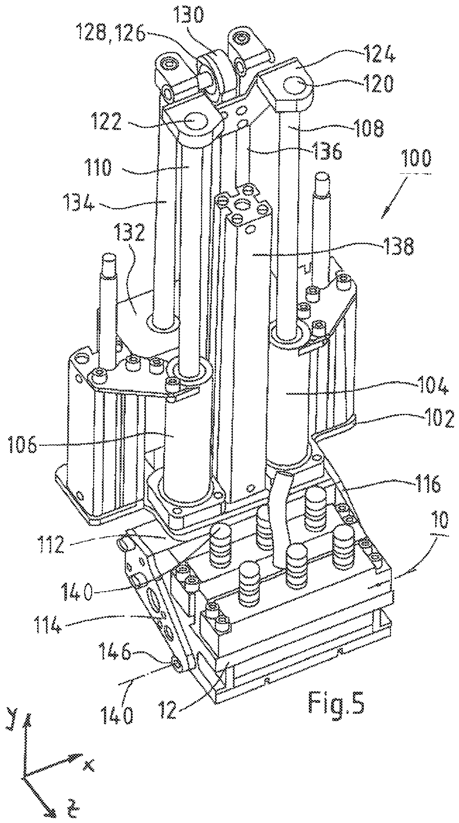

Bei der vollautomatischen Ultraschallprüfung von flächigen Bauteilen wird der als Flächenprüfkopf ausgebildete Prüfkopf 10 in einer Gravitationsausgleichsvorrichtung 100 gemäß Fig. 5 geführt. Die Gravitationsausgleichsvorrichtung umfasst eine Basisplatte 102, welche fest mit einer Handhabungseinrichtung wie Portalroboter (nicht dargestellt) verbindbar ist. Von einer Oberseite der Basisplatte 102 erstrecken sich Führungszylinder 104, 106, welche mit Abstand zueinander parallel angeordnet sind. In den Führungszylindern 104, 106 sind Führungsstangen 108, 110 axial verschiebbar gelagert. Erste, untere Enden der Führungsstangen 110, 108, welche sich unterhalb der Basisplatte 102 erstrecken, sind über einen Verbindungsblock 112 miteinander verbunden. Von dem Verbindungsblock gehen Haltelemente 114, 116 aus, die den Prüfkopf 10 in Arbeitsstellung halten. Dabei sind die Halteelemente 114, 116 mit dem Grundkörper 12 der Prüfkopfanordnung 10 verbindbar wie verschraubbar.

Zweite, obere Enden 120, 122 der Führungsstangen 110, 108, welche sich oberhalb der Basisplatte 102 erstrecken, sind ebenfalls über ein Verbindungselement 124 miteinander verbunden. Das Verbindungselement 124 ist mit einem geschlossenen Band 130 verbunden, welches über eine erste Umlenkrolle 126 und eine zweite Umlenkrolle 128 (nicht dargestellt) geführt wird. Ferner ist das Band 130 mit einem Gravitationsgegengewicht 132 gekoppelt, welches entlang von Führungsstangen 134, 136 entgegensetzt zu der Bewegung des Prüfkopfes 10 verschiebbar geführt ist. Enden der Führungsstangen 134, 136 sind über eine Achse miteinander verbunden, auf der die erste Umlenkrolle 126 zwischen den Führungsstangen umlaufend drehbar gelagert ist. Die zweite Umlenkrolle 128 ist in der Basisplatte 102 drehbar gelagert.

Ferner ist auf der Basisplatte 110 ein Pneumatikzylinder 138 vorgesehen, vorzugsweise zwischen den Führungsstangen 110, 108, wobei eine Kolbenstange 140 des Pneumatikzylinders 138 mit dem Verbindungsblock 112 verbunden ist, um den Prüfkopf 10 in Arbeitsposition zu justieren.

Nachfolgend wird auf das in Fig. 5 dargestellte kartesische Koordinatensystem Bezug genommen. Die zwischen den Halteelementen 114, 116 angeordnete Prüfkopfanordnung 10 ist um eine entlang der X-Achse des Koordinatensystems, d. h. quer zur Bewegungsrichtung (Z-Achse) verlaufende Achse 140 schwenkbar gelagert. Hierzu sind in dem Grundkörper 18 Aufnahmen 142, 144 eingebracht, in welche jeweils ein Drehbolzen 146 aufgenommen ist, welcher mit dem Haleelement 114, 116 verbindbar ist. Dadurch wird eine kardanische Aufhängung erreicht, wodurch die Prüfkopfanordnung 10 einer Kontur des zu prüfenden Teils passiv nachfolgen kann. Nach dem Stand der Technik wäre dies nicht möglich, da die bekannten Prüfkopfanordnungen zu schwer und unflexibel sind.

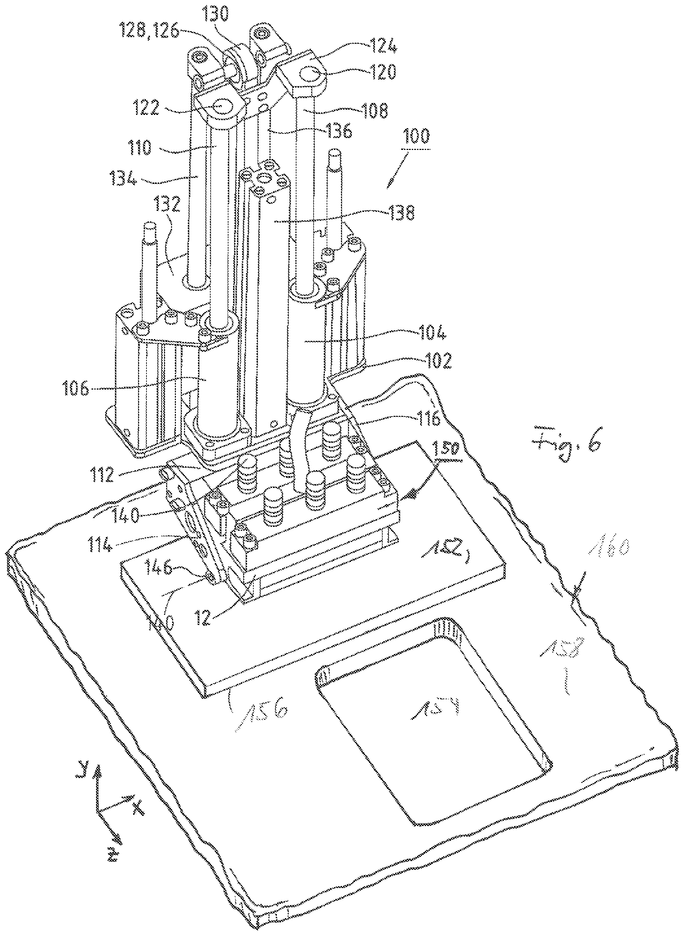

Fig. 6 zeigt die Gravitationsausgleichsvorrichtung 100 mit einer erfindungsgemäßen Ausführungsform eines Flächenprüfkopfes 150, der sich gegenüber der Prüfkopfanordnung gemäß den Fig. 1 bis 5 dadurch unterscheidet, dass eine Gleitplatte 152 vorgesehen ist, welche eine Fläche aufweist, die größer ist als eine Fläche des Grundkörpers (26). Insbesondre weist die Gleitplatte 52 eine Dimensionierung derart auf, dass beim Überfahren einer Durchbrechung 154 bzw. einer Kante 156 zumindest ein Abschnitt einer Unterseite 156 der Gleitplatte 152 auf einer Oberseite 158 des zu prüfenden Bauteils 160 aufliegt.

Dadurch ist gewährleistet, dass insbesondere bei Verwendung der Gravitationsausgleichsvorrichtung 100 eine Auflage auf der Oberfläche 158 des Bauteils 160 sichergestellt ist und dass zwischen Unterseite 156 der Gleitplatte 152 und Oberseite 158 stets ein Wasserkissen ausgebildet wird.

Durch die großflächige Ausführung der Gleitplatte 152 wird des Weiteren erreicht, dass mit wenig Wasserdruck ein den Flächenprüfkopf 150 tragendes Wasserkissen gebildet wird. Unterstützend wirken hierbei die auf der Unterseite 156 der Gleitplatte angeordneten in Verfahrrichtung verlaufenden Rillen sowie eine turbulenzfreie Strömung, die im Wesentlichen auch durch die Vielzahl von Öffnungen zwischen der Vorlaufkammer und der Strömungskammer ausgebildet sind und eine gleichmäßige Verteilung des Wassers gewährleisten.

Gegenüber dem Stand der Technik, d. h. Flächenprüfköpfe mit kleiner Auflagefläche, welche nicht geeignet sind ein "Wasserkissen" aufzubauen, bietet der Flächenprüfkopf insbesondere in Verbindung mit der Gravitationsausgleichsvorrichtung 100 den Vorteil, dass die Prüfanordnung leichter und damit auch schneller über der Oberfläche verfahren werden kann, so dass die Prüfung insgesamt schneller durchführbar ist. Hinzukommt, dass aufgrund der kardanischen Aufhängung des Prüfkopfes in Verbindung mit der Gravitationsausgleichvorrichtung 100 der Prüfkopf in vielen Freiheitsgeraden beweglich ist, so dass Unebenheiten, Wellen und dgl. in der Oberfläche 158 des zu prüfenden Bauteils ausgeglichen werden können, ohne dass gegebenenfalls eine Umprogrammierung des die Anordnung führenden Portalroboters erfolgen muss.

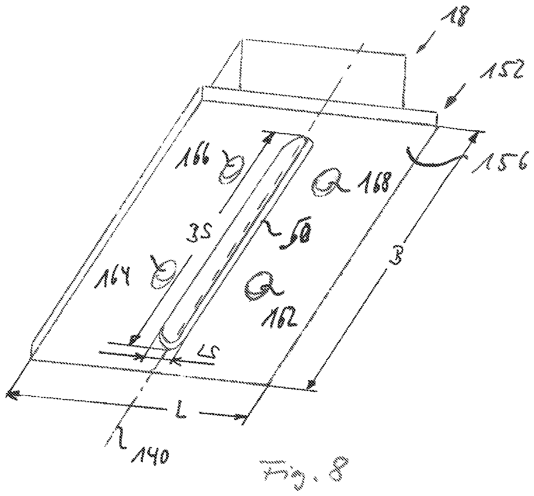

Fig. 8 zeigt eine perspektivische Ansicht der Unterseite 156 der Gleitplatte 152. Entlang der Mittelachse 140 verläuft die schlitzartige Wasserauslassöffnung 62, über die einerseits Ultraschallwellen über die Wasserströmung an das zu prüfende Bauteil 160 angekoppelt werden und über die eine Wasserströmung zur Erzeugung eines Wasserkissens erzeugt wird, auf dem die Gleitplatte 152 aufliegt. Ergänzend sind Wasserauslassöffnungen 162, 164, 166, 168 vorgesehen, über die Wasser zwischen Unterseite 156 der Gleitplatte 152 und der Oberfläche 158 des Bauteils 160 eingeströmt wird.

Die Wasserauslassöffnungen 162 - 168 sind über Kanäle mit den Vorlaufkammern 14, 16 verbunden.

Vorzugsweise weist die Gleitplatte 152 in Prüfrichtung eine Länge L im Bereich von 100 mm ≤ L ≤ 200 mm, vorzugsweise L = 160 mm auf und eine Breite B quer zur Prüfrichtung im Bereich von 200 mm ≤ B ≤ 300 mm, vorzugsweise B = 230 mm auf. Die schlitzförmige Wasserauslassöffnung 62 weist eine Erstreckung BS quer zur Prüfrichtung im Bereich von 50 ≤ BS ≤ 100 mm, vorzugsweise 75 mm und eine Erstreckung LS in Prüfrichtung im Bereich von 4 mm ≤ LS ≤ 10 mm, vorzugsweise LS = 6 mm auf.

Zu der Dimensionierung der Gleitplatte 152 ist anzumerken, dass die Länge L größer ist als die maximale Längserstreckung einer Durchbrechung 154 und/oder die Breite B größer ist als eine Erstreckung der Durchbrechung 154 quer zur Prüfrichtung, so dass beim Überfahren der Gleitplatte 152 diese mit zumindest einem Abschnitt mit der Unterseite 156 auf der Oberfläche 158 des zu prüfenden Bauteils 160 aufliegt.

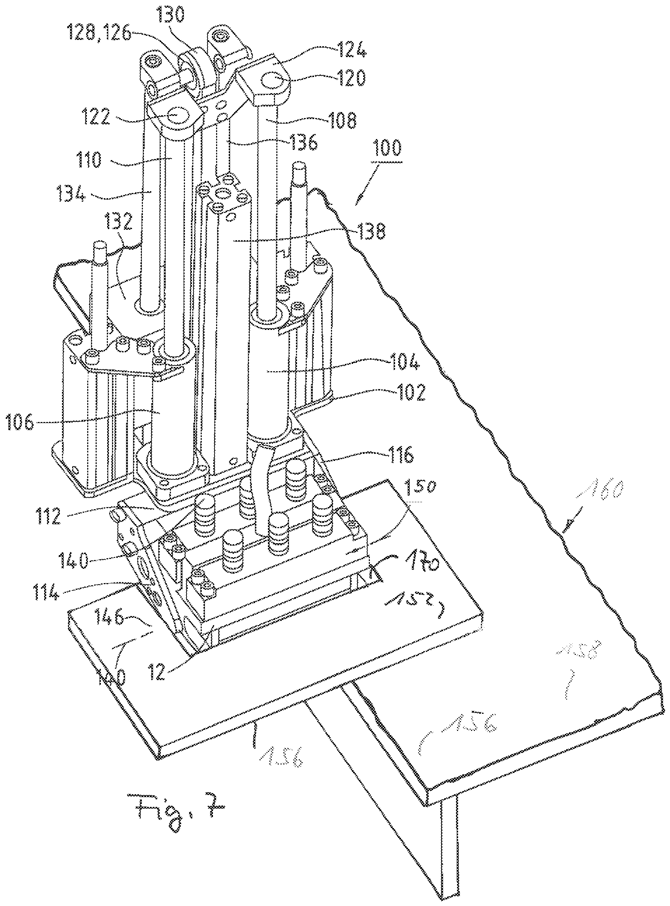

Gemäß Fig. 7 weist die Gleitplatte 152 oberseitig eine Vertiefung 170 auf, in der der Grundkörper 12 mit Drehbolzen 146 aufgenommen ist. Dadurch wird der abstand der Drehachse 140 zur Unterseite 156 der Gleitplatte 152 minimiert, um die Schwenkeigenschaften des Flächenprüfkopfes zu verbessern.

## Patentansprüche

1. Flächenprüfkopf (10) zur Ankopplung von Ultraschallsignalen an ein zu prüfendes flächiges Bauteil (160) mittels Wasserfreistrahltechnik, umfassend einen Prüfkopf (12), zumindest eine Vorlaufkammer (14, 16) mit zumindest einem Wassereinlass (78), sowie einen Grundkörper (28) zur Aufnahme des Prüfkopfs (12), wobei der zumindest einen Vorlaufkammer (14, 16) eine Strömungskammer (42) nachgeordnet ist, welche sich durch eine Wasserauslassöffnung (50) zu einer Unterseite (56) des Flächenprüfkopfes (10) erstreckt, wobei sich zwischen der Unterseite (56) des Flächenprüfkopfes (10) und einer Oberfläche des zu prüfenden Bauteils (160) eine Wasserströmung bildet, wobei der Prüfkopf (12) außerhalb der zumindest einen Strömungs- und/oder Vorlaufkammer (14, 16) frei zugänglich lösbar angeordnet ist und wobei eine Sende-/Empfangselemente aufweisende Seitenfläche (64) des Prüfkopfes (12) einen Innenwandabschnitt der Strömungskammer (42) bildet, wobei der Flächenprüfkopf (10) mit einer bauteilseitig Unterseite (56, 156) des Flächenprüfkopfes (10) bildenden Platte (152) verbunden ist, deren flächige Erstreckung entlang des Bauteils (160) größer als flächige Erstreckung des Grundkörpers (28) entlang des Bauteils (160) ist,
**dadurch gekennzeichnet,**
**dass** die Platte (152) als Gleitplatte mit einer eine geschlossene, ebene Fläche bildenden Unterseite (156) ausgebildet ist, in der die Wasserauslassöffnung (50) als eine quer zur Prüfrichtung entlang einer Mittelachse (140) der Gleitplatte (152) verlaufende schlitzförmige Öffnung (50) zur Ausbildung eines den Flächenprüfkopf tragenden Wasserkissens ausgebildet ist.

2. Flächenprüfkopf nach Anspruch 1,
**dadurch gekennzeichnet,**
**dass** die Gleitplatte (152) eine Länge (L) in Prüfrichtung des zu prüfenden Bauteils (160) produktionsbedingt aufweist, die größer ist als eine Erstreckung einer in dem Bauteil (160) vorhandenen Durchbrechung (154) in Prüfrichtung und/oder dass die Gleitplatte (152) eine Breite (B) quer zur Prüfrichtung des Bauteils (160) aufweist, die größer ist als eine Erstreckung einer oder jeder Durchbrechung (154) quer zur Prüfrichtung.

3. Flächenprüfkopf nach zumindest einem der vorhergehenden Ansprüche,
**dadurch gekennzeichnet,**
**dass** die Gleitplatte (152) eine Länge (L) im Bereich von 100 mm < L < 200 mm, vorzugsweise 160 mm, eine Breite (B) im Bereich 200 mm < B < 300 mm, vorzugsweise 230 mm sowie eine Dicke (D) im Bereich von 5 mm < D < 20 mm aufweist.

4. Flächenprüfkopf nach zumindest einem der vorhergehenden Ansprüche,
**dadurch gekennzeichnet,**
**dass** die Gleitplatte (152) auf ihrer dem zu prüfenden Bauteil (160) zugewandten Unterseite (56,156) in Prüfrichtung verlaufende schlitzförmige Ausfräsungen (58) aufweist.

5. Flächenprüfkopf nach zumindest einem der vorhergehenden Ansprüche,
**dadurch gekennzeichnet,**
**dass** die schlitzförmige Wasserauslassöffnung (62) eine Länge (LS) quer zur Prüfrichtung im Bereich von 50 mm < LS < 100 mm, vorzugsweise LS = 75 mm und eine Breite (BS) in Prüfrichtung im Bereich von 4 mm < DS < 10 mm, vorzugsweise BS = 6 mm aufweist.

6. Flächenprüfkopf nach zumindest einem der vorhergehenden Ansprüche,
**dadurch gekennzeichnet,**
**dass** ergänzend zu der schlitzförmigen Wasseraustrittsöffnung (62) weitere Wasseraustrittsöffnungen (162, 164, 166, 168) in der Unterseite (156) der Gleitplatte (152) angeordnet sind, welche vorzugsweise mit Wasserzuleitungen über die Vorlaufkammern verbunden sind.

7. Flächenprüfkopf nach zumindest einem der vorhergehenden Ansprüche,
**dadurch gekennzeichnet,**
**dass** der Grundkörper (18) im Wesentlichen U-förmig ausgebildet ist, mit einer Grundplatte (26), von der sich an gegenüberliegenden Enden im Verhältnis zur Länge der Grundplatte (26) kurze Seitenwandelemente (36, 38) erstrecken, wobei in die Grundplatte (26) entlang ihrer Längsachse (63) eine vorzugsweise schlitzförmige Öffnung (62) zur Aufnahme der die Sende-/Empfangselemente aufweisenden Unterseite (64) des Prüfkopfes (12) eingebracht ist, sowie vorzugsweise beidseitig parallel zu der schlitzförmig verlaufenden Öffnung (62) verlaufende Durchbrechungen (70, 72) wie Bohrungen, welche sich auf der Oberseite der Grundplatte (26) in mit dieser verbundene Vorkammern (14, 16) erstrecken, dass zwischen den Seitenwandelementen (36, 38) auf einer Unterseite der Grundplatte (26) entlang von Längsseiten (27,28) der Grundplatte (26) jeweils eine Innenkontur (38, 40) der Strömungskammer (42) bildende Kammerelemente (44, 46) angeordnet sind und dass die Kammerelemente (44, 46) über die parallel zu der Grundplatte verlaufende und mit dem Grundkörper befestigbare Gleitplatte (152) fixierbar sind.

8. Flächenprüfkopf nach zumindest einem der vorhergehenden Ansprüche,
**dadurch gekennzeichnet,**
**dass** der Prüfkopf (12) zwischen den Vorlaufkammern (14,16) angeordnet ist.

9. Flächenprüfkopf nach zumindest einem der vorhergehenden Ansprüche,
**dadurch gekennzeichnet,**
**dass** die Vorlaufkammer (14, 16) quaderförmig ausgebildet ist und vorzugsweise aus einem Kunststoffmaterial besteht, umfassend eine auf einer Unterseite (80) eingebrachte, einen Kammerraum (82, 84) ausbildende Fräsung sowie in einer Oberseite (76) eingebrachte Durchbrechungen zur Aufnahme von Wasseranschlüssen (78) und dass die Vorlaufkammer über Befestigungselemente (74) wie Schrauben derart auf der Oberseite der Grundplatte (26) verschraubbar ist, dass die parallel zu der schlitzförmigen Öffnung (62) verlaufenden Bohrungen (70, 72) in die Kammern (82, 84) der Vorlaufkammer (14, 16) münden und/oder dass die Bohrungen (70, 72) in einem Winkel in die Grundplatte (26) des Grundkörpers eingebracht sind, der im Wesentlichen einem Neigungswinkel der Strömungskammerkontur (38, 40) im Bereich der Bohrungen (70, 72) entspricht.

10. Flächenprüfkopf nach zumindest einem der vorhergehenden Ansprüche,
**dadurch gekennzeichnet,**
**dass** die Prüfkopfanordnung (10) kardanisch, vorzugsweise um ihre Längsachse (140) schwenkbar in einer Haltevorrichtung (100) wie Gravitationsausgleichsvorrichtung geordnet ist.

11. Flächenprüfkopf nach zumindest einem der vorhergehenden Ansprüche,
**dadurch gekennzeichnet,**
**dass** der Grundkörper (12) Aufnahmen (144, 146) für Drehbolzen (146) aufweist, mit denen die Prüfkopfanordnung (10) mit der Haltevorrichtung (100) verbindbar ist und/oder dass die Gleitplatte (152) oberseitig eine Vertiefung (170) zur Reduzierung eines Abstandes der Drehbolzen (146) zu der Unterseite (156) der Gleitplatte (152) aufweist.

## Claims

1. A planar probe head (10) for coupling ultrasonic signals to a planar component (160) to be tested, by means of water-free jet technology, comprising a probe head (12), at least one pre-flow chamber (14, 16) having at least one water inlet (78) as well as a base body (28) for receiving the probe head (12), wherein a flow chamber (42) is mounted downstream of at least one pre-flow chamber (14, 16), said flow chamber extending through a water outlet opening (50) to a lower face (56) of the planar probe head (10), wherein a water flow is formed between the lower face (56) of the planar probe head (10) and a surface of the component (160) to be tested, wherein the probe head (12) is releasably arranged so as to be freely accessible outside the at least one flow chamber and/or pre-flow chamber (14, 16) and wherein a side surface (64) of the probe head (12) comprising transmitting/receiving elements forms an internal wall portion of the flow chamber (42), wherein the planar probe head (10) is connected to a plate (152) forming a lower face (56, 156) of the planar probe head (10) on the component side, the two-dimensional extent thereof along the component (160) being greater than the two-dimensional extent of the base body (28) along the component (160),
**characterised**
**in that** the plate (152) is configured as a sliding plate having a lower face (156) forming a closed planar surface in which the water outlet opening (50) is configured as a slot-shaped opening (50) running transversely to the testing direction along a central axis (140) of the sliding plate (152), in order to form a water cushion bearing the planar probe head.

2. The planar probe head according to claim 1,
**characterised**
**in that** the sliding plate (152) has a length (L) in the testing direction of the component (160) to be tested, for production reasons, which is greater than an extent of a through-hole (154) present in the component (160) in the testing direction and/or in that the sliding plate (152) has a width (B) transversely to the testing direction of the component (160) which is greater than an extent of one or each through-hole (154) transversely to the testing direction.

3. The planar probe head according to at least one of the preceding claims,
**characterised**
**in that** the sliding plate (152) has a length (L) ranging from 100 mm < L < 200 mm, preferably 160 mm, a width (B) ranging from 200 mm < B < 300 mm, preferably 230 mm as well as a thickness (D) ranging from 5 mm < D < 20 mm.

4. The planar probe head according to at least one of the preceding claims,
**characterised**
**in that** on its lower face (56, 156) facing the component (160) to be tested the sliding plate (152) has slot-shaped milled grooves (58) running in the testing direction.

5. The planar probe head according to at least one of the preceding claims,
**characterised**
**in that** the slot-shaped water outlet opening (62) has a length (LS) transversely to the testing direction ranging from 50 mm < LS < 100 mm, preferably LS = 75 mm and a width (BS) in the testing direction ranging from 4 mm < DS < 10 mm, preferably BS = 6 mm.

6. The planar probe head according to at least one of the preceding claims,
**characterised**
**in that** in addition to the slot-shaped water outlet opening (62) further water outlet openings (162, 164, 166, 168) are arranged in the lower face (156) of the sliding plate (152) which are preferably connected to water supply lines via the pre-flow chambers.

7. The planar probe head according to at least one of the preceding claims,
**characterised**
**in that** the base body (18) is of substantially U-shaped configuration, having a base plate (26) from which short side wall elements (36, 38) extend at opposing ends relative to the length of the base plate (26), wherein incorporated in the base plate (26) along its longitudinal axis (63) is a preferably slot-shaped opening (62) for receiving the lower face (64) of the probe head (12) comprising the transmitting/receiving elements, as well as through-holes (70, 72) preferably running on both sides parallel to the opening (62) which runs in a slot-shaped manner, such as bores which extend on the upper face of the base plate (26) in pre-flow chambers (14, 16) connected thereto, in that chamber elements (44, 46) forming in each case an internal contour (38, 40) of the flow chamber (42) are arranged between the side wall elements (36, 38) on a lower face of the base plate (26) along longitudinal sides (27, 28) of the base plate (26) and in that the chamber elements (44, 46) are able to be fixed via the sliding plate (152) which runs parallel to the base plate and which is able to be fastened to the base body.

8. The planar probe head according to at least one of the preceding claims,
**characterised**
**in that** the probe head (12) is arranged between the pre-flow chambers (14, 16).

9. The planar probe head according to at least one of the preceding claims,
**characterised**
**in that** the pre-flow chamber (14, 16) is of cuboidal configuration and preferably consists of a plastics material, comprising a milled groove incorporated on a lower face (80) and forming a chamber space (82, 84) as well as through-holes incorporated in an upper face (76) for receiving water connections (78) and in that the pre-flow chamber is able to be screwed to the upper face of the base plate (26) via fastening elements (74) such as screws, such that the bores (70, 72) running parallel to the slot-shaped opening (62) open into the chambers (82, 84) of the pre-flow chamber (14, 16) and/or in that the bores (70, 72) are incorporated in the base plate (26) of the base body at an angle which substantially corresponds to an angle of inclination of the flow chamber contour (38, 40) in the region of the bores (70, 72).

10. The planar probe head according to at least one of the preceding claims,
**characterised**
**in that** the probe head arrangement (10) is arranged cardanically, preferably pivotably about its longitudinal axis (140), in a holding device (100) such as a gravitation compensating device.

11. The planar probe head according to at least one of the preceding claims,
**characterised**
**in that** the base body (12) has receivers (144, 146) for pivot pins (146), the probe head arrangement (10) being able to be connected thereby to the holding device (100) and/or in that the sliding plate (152) has a recess (170) on the upper face for reducing a spacing of the pivot pin (146) relative to the lower face (156) of the sliding plate (152).

## Revendications

1. Palpeur de surfaces (10) destiné à accoupler des signaux ultrasonores à un élément de construction (160) plan qui doit être vérifié au moyen d'une technique de jet d'eau libre, comprenant un palpeur (12), au moins une chambre aller (14, 16) pourvue d'au moins une entrée d'eau (78), ainsi qu'un corps de base (28) destiné à recevoir le palpeur (12), en aval de l'au moins une chambre aller (14, 16) étant placée une chambre d'écoulement (42) qui par un orifice de sortie d'eau (50) s'étend vers une face inférieure (56) du palpeur de surfaces (10), entre la face inférieure (56) du palpeur de surfaces (10) et une surface de l'élément de construction (160) qui doit être vérifié se formant un écoulement d'eau, le palpeur (12) étant placé de manière amovible, en étant librement accessible à l'extérieur de l'au moins une chambre d'écoulement et/ou chambre aller (14, 16) et une surface latérale (64) du palpeur (12) qui comporte des éléments émetteurs/récepteurs formant une section de paroi intérieure de la chambre d'écoulement (42), le palpeur de surfaces (10) étant relié avec une plaque (152) formant la face inférieure (56, 156) côté élément de construction du palpeur de surfaces (10), dont l'extension plane le long de l'élément de construction (160) est supérieure à l'extension plane du corps de base (28) le long de l'élément de construction (160),
**caractérisé**
**en ce que** la plaque (152) est conçue sous la forme d'une plaque coulissante, pourvue d'une face inférieure (156) formant une surface plane fermée, dans laquelle l'orifice de sortie d'eau (50) est conçu sous la forme d'un orifice (50) en forme de fente s'écoulant à la transversale de la direction de vérification, le long d'un axe médian (140) de la plaque coulissante (152), pour former un coussin d'eau portant le palpeur de surfaces.

2. Palpeur de surfaces selon la revendication 1,
**caractérisé**
**en ce que** la plaque coulissante (152) présente une longueur (L) due à la production, dans la direction de vérification de l'élément de construction (160) qui doit être vérifié qui est supérieure à une extension d'un ajour (154) présent dans l'élément de construction (160) dans la direction de vérification et/ou en ce que la plaque coulissante (152) présente une largeur (B) à la transversale de la direction de vérification de l'élément de construction (160) qui est supérieure à une extension d'un ou de chaque ajour (154) à la transversale de la direction de vérification.

3. Palpeur de surfaces selon au moins l'une quelconque des revendications précédentes,
**caractérisé**
**en ce que** la plaque coulissante (152) présente une longueur (L) de l'ordre de 100 mm < L < 200 mm, de préférence de 160 mm, une largeur (B) de l'ordre de 200 mm < B < 300 mm, de préférence de 230 mm, ainsi qu'une épaisseur (D) de l'ordre de 5 mm < D < 20 mm.

4. Palpeur de surfaces selon au moins l'une quelconque des revendications précédentes,
**caractérisé**
**en ce que** sur sa face inférieure (56, 156) dirigée vers l'élément de construction (160) qui doit être vérifié, la plaque coulissante (152) comporte des fraisages (58) en forme de dentes, qui s'écoulent dans la direction de vérification.

5. Palpeur de surfaces selon au moins l'une quelconque des revendications précédentes,
**caractérisé**
**en ce que** l'orifice de sortie d'eau (62) en forme de fente présente une longueur (LS) à la transversale de la direction de vérification de l'ordre de 50 mm < LS < 100 mm, de préférence de LS = 75 mm et une largeur (BS) dans la direction de vérification de l'ordre de 4 mm < DS < 10 mm, de préférence de BS = 6 mm.

6. Palpeur de surfaces selon au moins l'une quelconque des revendications précédentes,
**caractérisé**
**en ce qu'**en complément de l'orifice de sortie d'eau (62) en forme de fente, des orifices de sortie d'eau (162, 164, 166, 168) supplémentaires, lesquels sont reliés de préférence avec des conduits d'alimentation d'eau par l'intermédiaire des chambres aller sont placés dans la face inférieure (156) de la plaque coulissante (152).

7. Palpeur de surfaces selon au moins l'une quelconque des revendications précédentes,
**caractérisé**
**en ce que** le corps de base (18) est conçu sensiblement en forme de U, avec une plaque d'embase (26) à partir de laquelle sur des extrémités opposées par rapport à la longueur de la plaque d'embase (26) s'étendent de courts éléments de paroi latérale (36, 38), dans la plaque d'embase (26), le long de son axe longitudinal (63) étant ménagés un orifice (62) de préférence en forme de fente, destiné à recevoir la face inférieure (64) du palpeur (12) comportant les éléments émetteurs/récepteurs, ainsi que des ajours (70, 72) s'écoulant de préférence de part et d'autre à la parallèle de l'orifice (62) s'écoulant en forme de fente, tels que des perçages, lesquels s'étendent sur la face supérieure de la plaque d'embase (26) dans des préchambres (14, 16) reliées avec celle-ci, en ce qu'entre les éléments de paroi latérale (36, 38), sur une face inférieure de la plaque d'embase (26), le long de côtés longitudinaux (27, 28) de la plaque d'embase (26) sont placés des éléments de chambre (44, 46) formant chacun un contour intérieur (38, 40) de la chambre d'écoulement (42) et en ce que les éléments de chambre (44, 46) sont susceptibles d'être fixés par l'intermédiaire de la plaque coulissante (152) s'écoulant à la parallèle de la plaque d'embase et susceptible d'être attachée avec le corps de base.

8. Palpeur de surfaces selon au moins l'une quelconque des revendications précédentes,
**caractérisé**
**en ce que** le palpeur (12) est placé entre les chambres aller (14, 16).

9. Palpeur de surfaces selon au moins l'une quelconque des revendications précédentes,
**caractérisé**
**en ce que** la chambre aller (14, 16) est conçue en forme de parallélépipède et est composée de préférence d'une matière plastique comprenant un fraisage ménagé sur une face inférieure (80), formant un espace de chambre (82, 84) ainsi que des ajours ménagés dans une face supérieure (76), destinés à recevoir des branchements d'eau (78) et en ce que la chambre aller est susceptible d'être vissée par l'intermédiaire d'éléments de fixation (74) tels que des vis sur la face supérieure de la plaque d'embase (26), de telle sorte que les perçages (70, 72) s'écoulant à la parallèle de l'orifice (62) en forme de fente débouchent dans les chambres (82, 84) de la chambre aller (14, 16) et/ou en ce que les perçages (70, 72) sont ménagés dans la plaque d'embase (26) du corps de base sous un angle qui correspond sensiblement à un angle d'inclinaison du contour de la chambre d'écoulement (38, 40) dans la zone des perçages (70, 72).

10. Palpeur de surfaces selon au moins l'une quelconque des revendications précédentes,
**caractérisé**
**en ce que** l'agencement de palpeur (10) est organisé à la manière d'un cardan, en étant susceptible de pivoter de préférence autour de son axe longitudinal (140) dans un dispositif de maintien (100), tel qu'un dispositif compensateur de gravitation.

11. Palpeur de surfaces selon au moins l'une quelconque des revendications précédentes,
**caractérisé**
**en ce que** le corps de base (12) comporte des logements (144, 146) pour des pivots (146), à l'aide desquels l'agencement de palpeur (10) est susceptible d'être relié avec le dispositif de maintien (100) et/ou en ce que la plaque coulissante (152) comporte sur sa face supérieure un creux (170) destiné à réduire un écart entre le pivot (146) et la face inférieure (156) de la plaque coulissante (152).
